# EUROPÄISCHE PATENTANMELDUNG

(11) **EP 1 300 230 A1**
(43) Veröffentlichungstag der Anmeldung: **09.04.2003**
(21) Anmeldenummer: 02019677.0
(22) Anmeldetag: 04.09.2002
(51) Int. Cl.: B29C 45/17, B29C 45/54, B29C 45/58

(54) **Kolbeneinspritzeinheit und Verfahren zu deren Betrieb**

(30) Priorität: 06.10.2001 DE 10149429
(71) Anmelder: Krauss-Maffei Kunststofftechnik GmbH, 80997 München (DE)
(72) Erfinder: Zelleröhr, Michael, Dr., 47533 Kleve (DE)
(74) Vertreter: Zollner, Richard

(57) **Zusammenfassung**

Die Erfindung betrifft eine Kolbeneinspritzeinheit mit einem Kolbenzylinder (1,101,201), einem in diesem axial geführten Kolben (3,103,203), einem Kolbenraum (7,107,207), der von dem Kolbenzylinder und einer stirnseitigen Kolbenfläche (5,105,205) begrenzt wird und der über eine Masseeintrittsöffnung (15,115,215) mit Schmelze befüllbar ist, einer im Kolbenzylinder (1,101,201) angeordneten, dem Kolben im wesentlichen gegenüberliegenden Einspritzöffnung (8,108,208) sowie einem Einspritzöffnungs-Verschlußmechanismus (9,109,209), der die Einspritzöffnung verschließt, einer Spülöffnung (11,111,211) zum Ausleiten von Schmelze aus dem Kolbenraum (7,107,207) und einer Verschlußeinrichtung (13,113,213) zum Verschließen der Spülöffnung (11,111,211).

Problematisch bei herkömmlichen Kolbeneinspritzeinheiten ist, daß sie ein schlechtes Selbstreinigungsverhalten aufweisen. Durch direkt an der stirnseitigen Kolbenfläche angelagerten Kunststoff ergeben sich lange Spülzeiten bei Farb- oder Materialwechseln.

Dies wird dadurch gelöst, daß die Spülöffnung (11,111,121) als Strömungskanal im Kolben (3,103,203) ausgebildet ist.

## Beschreibung

Die Erfindung betrifft eine Kolbeneinspritzeinheit mit Vorplastifizierung gemäß dem Oberbegriff des Patentanspruchs 1.

Kolbeneinspritzeinheiten, die nicht nach dem first-in-first-out Prinzip arbeiten, d.h. bei denen nicht die zuerst eingefüllte Schmelze auch zuerst wieder ausgestoßen wird, weisen oft ein schlechtes Selbstreinigungsverhalten auf. Besonders direkt an der stirnseitigen Kolbenfläche lagert sich Kunststoff an, der nicht bei jedem Spritzvorgang ausgestoßen wird, sondern teilweise sehr lange im Kolbenraum verbleibt. Dies führt dazu, daß sich bei Farb- oder Materialwechseln lange Ausfallzeiten ergeben, in denen die Kolbeneinspritzeinheit mit Schmelze gespült werden muß, um im Kolbenraum verbliebene Schmelzereste zu lösen und auszuspülen. Dies ist sehr zeitaufwendig und kostenintensiv, da viele Ausschußteile produziert werden.

Es sind Kolbeneinspritzeinheiten mit Vorplastifizierung bekannt, bei denen sowohl die Zuführung der Schmelze in den Kolbenvorraum als auch der Kolben so ausgebildet sind, daß beim Einfüllen der Schmelze eine möglichst gute Durchspülung mit Aufwirbelung verbleibender Schmelzereste gewährleistet ist. Entsprechende Kolbeneinspritzeinheiten sind in der DE 43 95 826 C2, US 3 298 061, EP 1 120 222 A2 sowie in der JP 101 38 301 A beschrieben.

In der internationalen Patentanmeldung WO 00/78523 A1 von Husky wird eine Kolbeneinspritzeinheit mit verbessertem Spülverhalten vorgestellt, bei der der Kolben entweder in einer vorderen Position arretiert wird und bei einer spülungsgünstigen Ausgestaltung des Schmelzeeinlasses der verbleibende Raum durchgespült wird. Der Schmelzeauslaß ist hierbei die Einspritzöffnung. In einer weiteren Ausgestaltung bei diesem Stand der Technik wird der Kolben in eine Spülstellung gebracht, die einer stärkeren Auslenkung als im normalen Einspritzbetrieb entspricht. Dadurch wird ein Leckage-Auslaß am Kolbenrand freigelegt, durch den bei in dieser Stellung arretiertem Kolben gespült wird. Gemäß einer Ausführungsform umfaßt der Leckage-Auslaß einen ringförmigen Kanal in der Zylinderinnenwand, so daß der Zylinderkopf beim Spülen gleichmäßig umströmt wird. Bei beiden Ausführungsformen, wird der Kolben stationär gehalten.

Durch die oben genannten Vorrichtungen kann jedoch nicht in ausreichendem Maße gewährleistet werden, daß an der Kolbenstirnfläche angelagertes Altmaterial mit möglichst wenig Spülmaterial ausgetragen wird.

Aufgabe der Erfindung ist es, eine Vorrichtung und ein Verfahren anzugeben, mit der bzw. mit dem das Entfernen von an der Kolbenfläche angelagertem Altmaterial mit möglichst wenig Spülmittel möglich ist.

Diese Aufgabe wird durch die Merkmale des Anspruchs 1 bzw. des Anspruchs 9 gelöst.

Erfindungsgemäß ist die Spülöffnung der Kolbeneinspritzeinheit als Strömungskanal im Kolben ausgebildet. Hierdurch wird die zum Spülen verwendete Schmelze nicht durch die Einspritzöffnung abgeführt, sondern über eine kolbenintegrierte Auslaßöffnung, was zu besonders günstigen Spüleigenschaften führt. Dabei kann der Kolben als Stufenkolben ausgeführt sein, dessen Außenquerschnitt sich von einem Maximalwert an einem stirnseitigen Abschnitt verringert, um die Reibung zwischen Kolben und Kolbenzylinder zu minimieren.

Des weiteren kann gemäß einer vorteilhaften Ausführungsform eine Abführvorrichtung für zwischen Kolbenzylinder und Kolben eingedrungene Schmelze vorgesehen sein.

Vorteilhafterweise wird der Kolben selbst im wesentlichen über die Länge des Strömungskanals unmittelbar mit Heizelementen beheizt, z.B. mit Heizpatronen, um die im Reinigungsbetrieb über die Spülöffnung abfließende Schmelze im flüssigen Zustand zu halten und so einen reibungslosen Ablauf zu gewährleisten.

Eine weitere Verbesserung der Funktionsweise läßt sich dadurch erreichen, daß die stirnflächenseitige Kolbenfläche zum Strömungskanal hin strömungsgünstig ausgebildet wird, wodurch ein effektiveres Spülen der Kolbenfläche möglich ist.

Des weiteren ist es besonders vorteilhaft, den Strömungskanal zumindest stirnflächenseitig als axiale Innenbohrung auszuführen. In diesem Fall besteht eine strömungsgünstige Ausführungsform der Kolbenstirnfläche darin, daß sie sich zur Innenbohrung hin trichterartig verjüngt, da so mögliche Schmelzeablagerungen am an den Zylinder grenzenden Außenbereich der Kolbenstirnfläche durch das Strömungsprofil einfach abgelöst und entfernt werden können.

Die Verschlußeinrichtung zum Verschließen der Spülöffnung wird vorzugsweise als Ventil ausgebildet, das im Kolben angebracht und leicht anzusteuern ist. Der Einspritzöffnungs-Verschlußmechanismus kann als Verschlußdüse, aber auch als Schaltventil ausgebildet werden, in das die Masseeintrittsöffnung mündet, und das in einer Stellung den Ausstoß von Schmelze aus dem Kolbenraum ermöglicht und in einer weiteren Stellung die Befüllung desselben mit Schmelze.

Ein mögliches Verfahren zum Betrieb einer erfindungsgemäßen Kolbeneinspritzeinheit wird im Anspruch 9 angegeben. Dabei wird der Kolben in eine Ausgangsstellung gebracht, die der Stellung zu Beginn eines Füllvorgangs des Kolbenraums mit Schmelze im Einspritzbetrieb entspricht. Hierauf wird die Einspritzöffnung verschlossen und der Kolbenraum mit Schmelze befüllt, wobei der Kolben axial zurückgeschoben wird. Sobald der Kolben die rechte Extremalstellung erreicht hat, wird die Verschlußeinrichtung des Strömungskanals geöffnet und der Kolben axial vorwärtsverschoben. Hierdurch wird die Schmelze aus dem Kolbenraum durch den Strömungskanal verdrängt und wäscht hierbei Schmelzereste aus, die sich sowohl entlang der Innenwand des Kolbenzylinders als auch auf der stirnseitigen Kolbenfläche selbst angelagert haben. Im Anschluß wird die Verschlußeinrichtung des Strömungskanals verschlossen. Nun kann entweder der Spülvorgang so oft wiederholt werden, bis die ausgeschiedene Schmelze ausreichend sauber ist oder ein neuer Einspritzvorgang vorgesehen ist. Eine strömungsgünstige Ausgestaltung der Kolbenfläche erhöht die Effizienz, da die Schmelze die Kolbenfläche besser umströmt und Ablagerungen schneller von dieser ablöst.

Alternativ kann der Kolben gemäß Anspruch 10 in einer beliebigen Stellung festgehalten werden. Nach dem Verschließen der Einspritzöffnung wird dann die Verschlußeinrichtung des Strömungskanals geöffnet und Schmelze durch die Masseeintrittsöffnung eingefüllt. Die Schmelze strömt hierbei durch die Spülöffnung nach außen und spült Verunreinigungen aus. Um ein verbessertes Spülergebnis zu erzielen, kann mehrfach gespült werden, wobei die Stellung des Kolbens über den gesamten Kolbenhub variiert wird.

Ein Vorteil des Spülens mit festgehaltenem Kolben ist die vereinfachte Entsorgung der zum Spülen verwendeten Schmelze. Bei dem Verfahren, das den Kolbenraum mithilfe der Kolbenbewegung spült, muß der Schmelzeauslaß am bewegten Kolben flexibel mit einem Abfallbehälter verbunden werden. Die Schwierigkeit einer flexiblen Verbindung entfällt bei stationärem Kolben. Hier ist es möglich, lediglich im Bereich der Kolbenaustrittsöffnung ein Auffanggefäß vorzusehen,

Im folgenden wird ein Ausführungsbeispiel der erfindungsgemäßen Kolbeneinspritzeinheit anhand von Zeichnungen näher erläutert. Es zeigen:
- Fig. 1: eine Schnittdastellung einer ersten erfindungsgemäßen Kolbeneinspritzeinheit mit einem als axialer Innenbohrung im Kolben ausgebildeten Strömungskanal,
- Fig. 2: eine Schnittdastellung einer zweiten erfindungsgemäßen Kolbeneinspritzeinheit mit strömungsgünstiger Ausbildung der stirnseitigen Kolbenfläche, und
- Fig. 3: eine Schnittdastellung einer dritten erfindungsgemäßen Kolbeneinspritzeinheit im Schnitt mit einem Schaltventil zum Verschließen der Einspritzöffnung und Anschließen der Masseeintrittsöffnung.

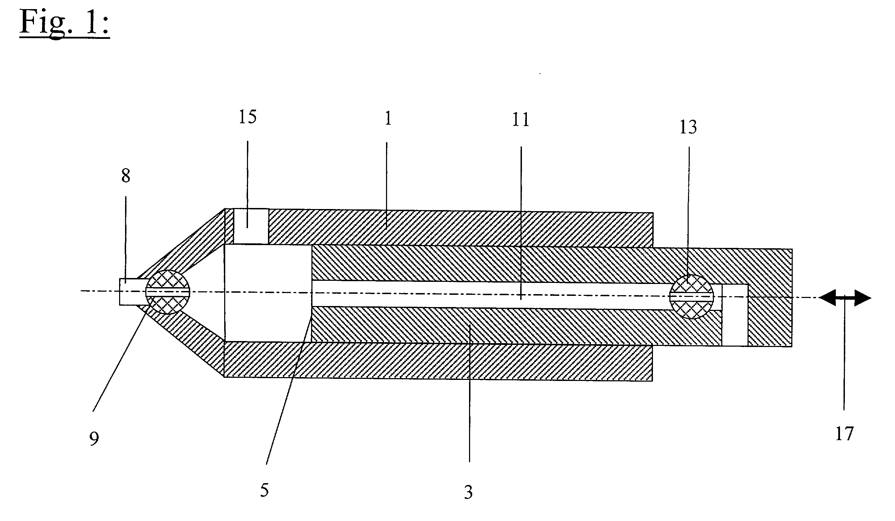

Die Kolbeneinspritzeinheit gemäß Fig. 1 besteht aus einem Kolbenzylinder 1 und einem in diesem axial verschiebbar gelagerten Kolben 3 mit einer stirnseitigen Kolbenfläche 5, die zusammen mit dem Kolbenzylinder 1 einen Kolbenraum 7 begrenzt. Ein Doppelpfeil 17 zeigt die Bewegungsrichtung des Kolbens 1 an. Über eine Einspritzöffnung 8, die mittels eines Drehventils 9 verschließbar ist, kann Schmelze in eine in der Figur nicht dargestellte angrenzende Spritzgußform ausgestoßen werden. Eine Masseeintrittsöffnung 15 dient der Zuführung von Schmelze aus einer nicht dargestellten Plastifiziereinheit. Im Kolben 3 ist ein durch zwei Sackbohrungen gebildeter Strömungskanal 11 ausgebildet. Durch den Strömungskanal 11, der mit einer Verschlußeinrichtung 13 geöffnet und verschlossen werden kann, ist zum Spülen verwendete Schmelze ausstoßbar.

In Fig. 1 ist der Strömungskanal 11 als stirnflächenseitig axiale Innenbohrung ausgeführt. Die auslaßseitige Ausführung kann den konstruktiven Gegebenheiten angepaßt werden.

Zum Spülbetrieb der Kolbeneinspritzeinheit gemäß Fig. 1 wird der Kolben 3 in eine vordere Position gebracht, die der Position entspricht, die er einnimmt, wenn im normalen Einspritzbetrieb mit dem Befüllen des Kolbenraums 7 mit Schmelze begonnen wird. Die Einspritzöffnung 8 wird durch die Verschlußdüse 9 verschlossen und anschließend wird durch die Masseeintrittsöffnung 15 mit dem Befüllen des Kolbenraums 7 mit Schmelze begonnen. Da hierbei der Kolben 3 nicht festgehalten, bewegt er sich in Fig. 1 nach rechts, während der Kolbenraum 7 mit Schmelze gefüllt wird. Gemäß einer Betriebsvariante kann der Kolben 3 auch kontrolliert rückwärts verfahren werden. Sobald der Kolbenraum 7 mit der vorgesehenen Menge an Schmelze befüllt ist bzw. der Kolben 3 seine rechte Extremalstellung erreicht hat, wird der Befüllungsvorgang beendet und das Verschlußventil 13 geöffnet. Der Kolben 3 beginnt eine Vorschubbewegung, in Fig. 1 nach links, wobei die Schmelze durch den Strömungskanal 11 nach außen gedrückt wird und dabei auf der Wand des Kolbenzylinders 1 und auf der Kolbenfläche 5 abgelagerte Schmelzereste ausspült. Die ausgeschiedene Schmelze wird in einem nicht dargestellten Abfallbehälter aufgefangen und entsorgt. Nach beendeter Vorschubbewegung wird das Verschlußventil 13 wieder verschlossen, und es kann ein weiterer Spülvorgang oder ein normaler Einspritzvorgang begonnen werden.

Alternativ zu dieser Vorgehensweise kann man auch den Kolben 3 in einer beliebigen Stellung im Kolbenzylinder 1 arretieren, die Verschlußdüse 9 schließen, die Verschlußeinrichtung 13 des Strömungskanals öffnen, und dem Kolbenraum 7 über die Masseeintrittsöffnung 15 Schmelze zuführen. Da bei diesem Vorgehen der Kolben 3 feststeht, wird die zugeführte Schmelze über die Spülöffnung 11 ausgeschieden, im Gegensatz zum vorher geschilderten Verfahren handelt es sich um einen kontinuierlichen Prozeß. Um eine möglichst gründliche Spülung auch der Zylinderwände zu gewährleisten, hat es sich als vorteilhaft erwiesen, mehrere Spülvorgänge durchzuführen. Hierbei wird der Kolben 3 in jeweils unterschiedlichen Stellungen entlang seines Hubs arretiert.

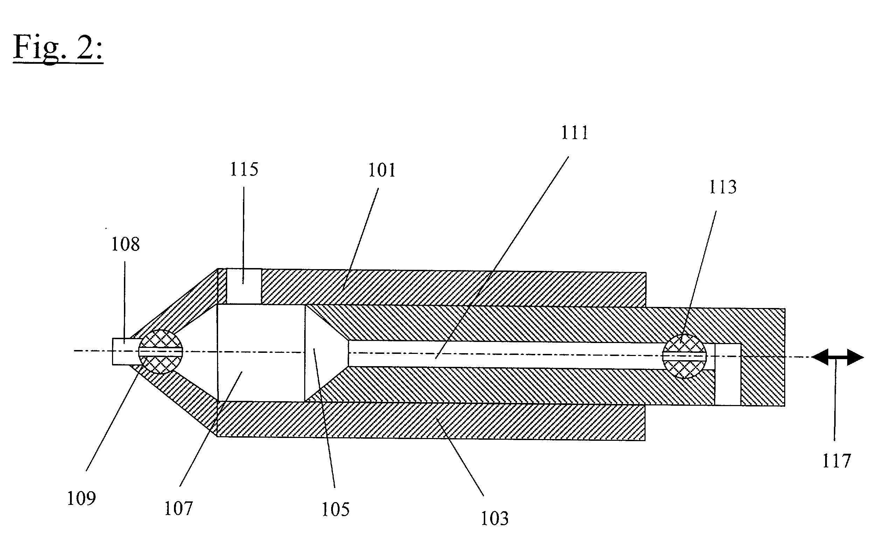

In Fig. 2 sind die Bezugszeichen, die denen in Fig. 1 entsprechen, um 100 erhöht. Als einziges Bauteil unterscheidet sich der Kolben 103 durch die Ausgestaltung der Kolbenoberfläche 105, die sich zur Innenbohrung 111 hin trichterartig verjüngt, wodurch sie vom Schmelzestrom besser gespült und dadurch schneller gereinigt wird.

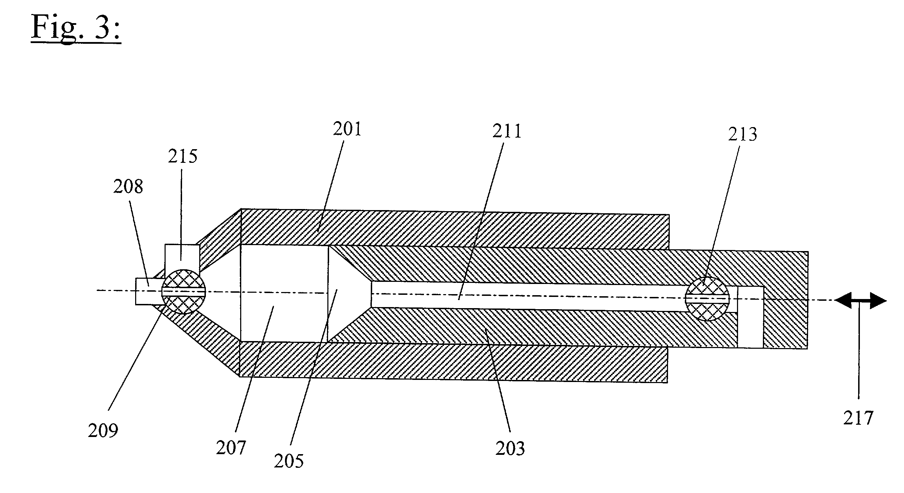

Fig. 3 weist gegenüber Fig. 2 wiederum um 100 erhöhte Bezugszeichen auf. Der Unterschied besteht hier in der Ausgestaltung der Einspritzöffnung 208 und der Masseeintrittsöffnung 215, die durch ein Schaltventil 209 jeweils abwechselnd mit dem Kolbenraum 207 in Verbindung gebracht werden können. Diese Ausführungsform hat den Vorteil, daß hier auch der vordere Teil des Kolbenraums 207 während des Spülvorgangs vollständig durchspült wird, da sich die Masseeintrittsöffnung 215 am vorderen Ende des Kolbenzylinders 201 befindet.
Die Verfahren zum Betrieb der drei dargestellten Ausführungsarten unterscheiden sich nicht.

### Bezugszeichenliste

- 1: Kolbenzylinder
- 3: Kolben
- 5: Kolbenfläche
- 7: Kolbenraum
- 8: Einspritzöffnung
- 9: Verschlußmechanismus
- 11: Strömungskanal
- 13: Verschlußeinrichtung
- 15: Masseeintrittsöffnung
- 17: Doppelpfeil
- 101: Kolbenzylinder
- 103: Kolben
- 105: Kolbenfläche
- 107: Kolbenraum
- 108: Einspritzöffnung
- 109: Verschlußmechanismus
- 111: Strömungskanal
- 113: Verschlußeinrichtung
- 115: Masseeintrittsöffnung
- 117: Doppelpfeil
- 201: Kolbenzylinder
- 203: Kolben
- 205: Kolbenfläche
- 207: Kolbenraum
- 208: Einspritzöffnung
- 209: Schaltventil
- 211: Strömungskanal
- 213: Verschlußeinrichtung
- 215: Masseeintrittsöffnung
- 217: Doppelpfeil

## Patentansprüche

1. Kolbeneinspritzeinheit mit einem Kolbenzylinder (1, 101, 201), einem in diesem axial geführten Kolben (3, 103, 203), einem Kolbenraum (7, 107, 207), der von dem Kolbenzylinder (1, 101, 201) und einer stirnseitigen Kolbenfläche (5, 105, 205) begrenzt wird und der über eine Masseeintrittsöffnung (15, 115, 215) mit Schmelze befüllbar ist, einer im Kolbenzylinder (1, 101, 201) angeordneten, dem Kolben (3, 103, 203) im wesentlichen gegenüberliegenden Einspritzöffnung (8, 108, 208) sowie einem Einspritzöffnungs-Verschlußmechanismus (9, 109, 209), der die Einspritzöffnung (8, 108, 208) verschließt, einer Spülöffnung (11, 111, 211) zum Ausleiten von Schmelze aus dem Kolbenraum (7, 107, 207) und einer Verschlußeinrichtung (13, 113, 213) zum Verschließen der Spülöffnung (11, 111, 211),
**dadurch gekennzeichnet, daß**
die Spülöffnung (11, 111, 211) als Strömungskanal (11, 111, 211) im Kolben (3, 103, 203) ausgebildet ist.

2. Kolbeneinspritzeinheit nach Anspruch 1,
**dadurch gekennzeichnet, daß**
im Kolben (3, 103, 203) Heizelemente im wesentlichen über die Länge des Strömungskanals (11, 111, 211) vorgesehen sind, durch deren Einwirkung die Schmelze im flüssigen Zustand gehalten wird.

3. Kolbeneinspritzeinheit nach Anspruch 1 oder 2,
**dadurch gekennzeichnet, daß**
die Kolbenfläche (105, 205), die den Kolbenraum (107, 207) begrenzt, strömungsgünstig ausgebildet ist, um ein effektiveres Spülen zu ermöglichen.

4. Kolbeneinspritzeinheit nach einem der vorhergehenden Ansprüche,
**dadurch gekennzeichnet, daß**
der Strömungskanal (11, 111, 211) zumindest stirnflächenseitig als axiale Innenbohrung ausgebildet ist.

5. Kolbeneinspritzeinheit nach Anspruch 4,
**dadurch gekennzeichnet, daß**
die Kolbenfläche (105, 205) derart ausgebildet ist, daß sie sich zur Innenbohrung (111, 211) hin trichterartig verjüngt.

6. Kolbeneinspritzeinheit nach einem der vorhergehenden Ansprüche,
**dadurch gekennzeichnet, daß**
die Verschlußeinrichtung (13, 113, 213) als Ventil ausgebildet ist.

7. Kolbeneinspritzeinheit nach einem der vorhergehenden Ansprüche,
**dadurch gekennzeichnet, daß**
der Verschlußmechanismus (9, 109) als Verschlußdüse ausgebildet ist.

8. Kolbeneinspritzeinheit nach einem der vorhergehenden Ansprüche,
**dadurch gekennzeichnet, daß**
ein Schaltventil (209) als Verschlußmechanismus eingesetzt wird und die Masseeintrittsöffnung (215) in dieses mündet, so daß in einer Stellung des Schaltventils (209) der Ausstoß von Schmelze aus dem Kolbenraum (207) ermöglicht ist, und in einer zweiten Stellung ein Befüllen desselben mit Schmelze.

9. Verfahren zum Betrieb einer Kolbeneinspritzeinheit nach einem der vorhergehenden Ansprüche,
**gekennzeichnet durch die Schritte**
Verschließen der Einspritzöffnung (8, 108, 208),
Füllen des Kolbenraums (7, 107, 207) mit Schmelze, wobei der Kolben (3, 103, 203) axial zurückgeschoben wird,
Öffnen der Verschlußeinrichtung (13, 113, 213),
und axiales Vorwärtsverschieben des Kolbens (3, 103, 203), wodurch die Schmelze **durch** die Spülöffnung (11, 111, 211) nach außen fließt.

10. Verfahren zum Betrieb einer Kolbeneinspritzeinheit nach einem der Ansprüche 1 bis 8,
**gekennzeichnet durch die Schritte**
Verschließen der Einspritzöffnung (8, 108, 208),
Öffnen der Verschlußeinrichtung (13, 113, 213), und
Füllen des Kolbenraums (7, 107, 207) mit Schmelze, wobei der Kolben (3, 103, 203) festgehalten wird und die Schmelze **durch** die Spülöffnung (11, 111, 211) nach außen strömt.

11. Verfahren zum Betrieb einer Kolbeneinspritzeinheit nach einem der Ansprüche 9 oder 10,
**gekennzeichnet durch den Schritt**
Schließen der Verschlußeinrichtung (13, 113, 213) vor einem Einspritzvorgang.
